# EUROPEAN PATENT APPLICATION

(11) **EP 2 273 766 A1**
(43) Date of publication of application: **12.01.2011**
(21) Application number: 09733145.8
(22) Date of filing: 15.04.2009
(51) Int. Cl.: H04M 1/02, H04B 1/38

(54) **MICROPHONE STRUCTURE FOR MOBILE PHONE**

(30) Priority: 17.04.2008 CN 200810066595
(71) Applicant: TCL Communication Technology Holdings Ltd., Gaoxin Nanyi Road Nanshan District Shenzhen Guangdong 518057 (CN)
(72) Inventor: LU, Xusheng, Guangdong 518057 (CN); WANG, Huiyao, Guangdong 518057 (CN)
(74) Representative: Brachmann, Roland W.
(86) International application number: PCT/CN2009/071268
(87) International publication number: WO 2009/127148

(57) **Abstract**

A microphone structure for a mobile phone is provided on the body (210) of the mobile phone. The microphone structure comprises a microphone module (220) connected to a main board circuit of the mobile phone. On the body (210) of the mobile phone, a microphone hole (212) is formed at the middle part of a case (211) faced to a user. The microphone module (220) is installed toward the microphone hole (212). For the microphone being formed at the middle part of the mobile phone, the microphone structure for a mobile phone in the present invention reduces the influence between a lower antenna and the microphone, and the voice quality influence caused by the wrong operation of a user, and it is convenient for a user to use.

## Description

### Field of the Invention

The present invention relates to a cell phone structure improvement, and in particular to a microphone structure improvement for a cell phone.

### Description of the Related Art

Along with the progress and development of human electronic technologies, mobile phones have become one of the indispensable wireless communication terminal equipments for people to communicate at any time and in any place. In China, for example, its mobile network was first built in 1987 when mobile phones changed ways of communication among people; ten years ago, China only had a total of 10 million mobile users, and a lot of urban residents communicated still mainly on fixed phone lines of China Telecom; after 2001, China's economy grew rapidly and the amount of mobile phone users increased sharply. According to data from the Chinese Ministry of Information Industry, China already had 487.4 million cell phone users at the beginning of 2007 and was still developing and growing with big strides.

Nowadays, there are numerous cell phones with various styles and functions from the earliest bar phones, flip phones to today's slide phones. Originally, all cell phone microphones were disposed at lower portions of cell phones and facing the mouth, while antennas are disposed on the top of cell phones. In such a configuration, the antenna is disposed too close to the head while making phone calls. Consequently, radiation will be relatively strong and cause damage to the human head. After a long period, various damage might occur. If antennas are disposed at the bottom of cell phones, the radiation will be relatively weak. Since microphones in the prior art are usually disposed very close to antennas, however, interference will become strong, leading to a poor call quality.

Therefore, the prior art needs to be improved and developed.

### Summary of the Invention

The object of the present invention is to provide a microphone structure for a cell phone to reduce the interaction between the microphone and the antenna by adjusting the microphone position on a cell phone.

The technology according to the present invention comprises:
A microphone structure for a cell phone disposed on a cell phone body and comprising a microphone module connected to a main circuit board of the cell phone, wherein on the cell phone body, a microphone hole is formed in the middle of the shell on the side facing a user thereof, and the microphone module is disposed corresponding to the microphone hole.

In the microphone structure for cell phone, the microphone hole is formed above the cell phone keyboard.

In the microphone structure for cell phone, an antenna is further connected to the cell phone circuit and the antenna is disposed below the cell phone keyboard and on the backside thereof.

In the microphone structure for cell phone, the cell phone is a flip, slide or bar phone.

Since the microphone is disposed in the middle of the cell phone, the microphone structure for cell phone according to the present invention reduces the interaction with the antenna at the bottom, makes it convenient for users to use, and reduces the impact on voice quality resulting from an operating error caused by the user.

### Brief Description of the Drawings:

- Fig. 1: is a front view of a microphone structure for a cell phone according to the present invention;
- Fig.2: is a view of the microphone structure for the cell phone on a cell phone body according to the present invention;
- Fig.3: is a part sectional view of the microphone structure for the cell phone according to the present invention; and
- Fig.4: is a view of an antenna for the microphone structure for the cell phone according to the present invention.

### Detailed Description of the Invention

The present invention's preferred embodiments will be further described in detail below with reference to the accompanying drawings.

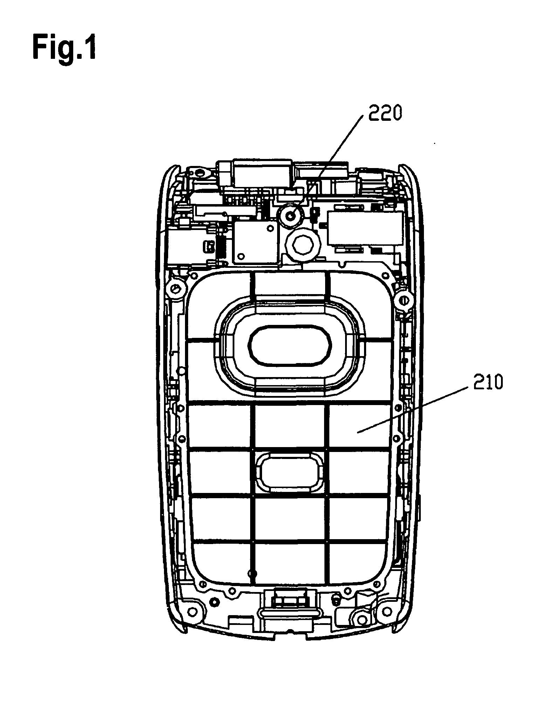

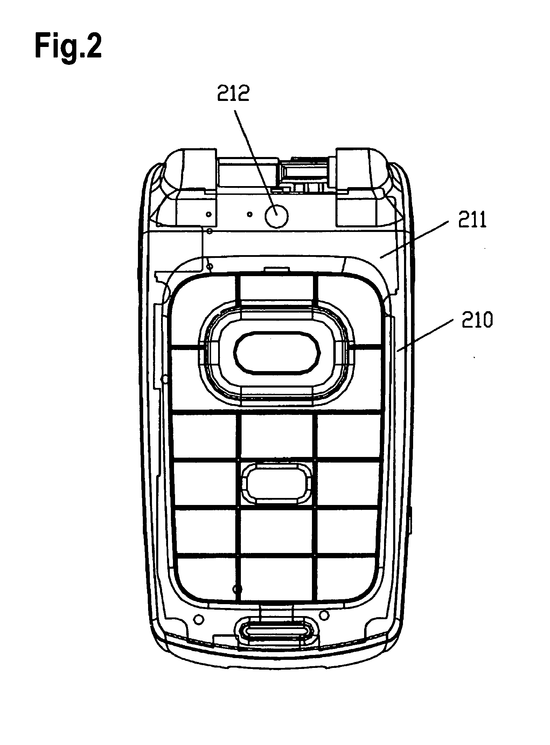

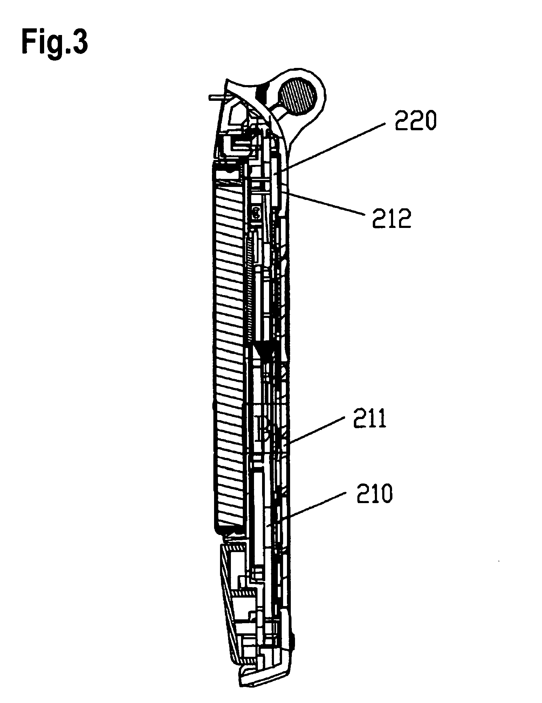

As shown in Fig. 1, a microphone structure for a cell phone according to the present invention is disposed on a cell phone body 210 and comprises a microphone module 220 connected to a main circuit board of the cell phone as shown in Fig.3. The cell phone can be of a flip, a slide or a bar cell phone style. On the cell phone body 210, a microphone hole 212 is formed in the middle of a shell 211 on the side facing a user thereof as shown in Fig.2 and Fig.3. The microphone hole 212 can be formed as a simple hole or in different hole shapes, such as quincunx or trefoil, according to acoustic principles. The microphone module 220 is disposed corresponding to the microphone hole 212.

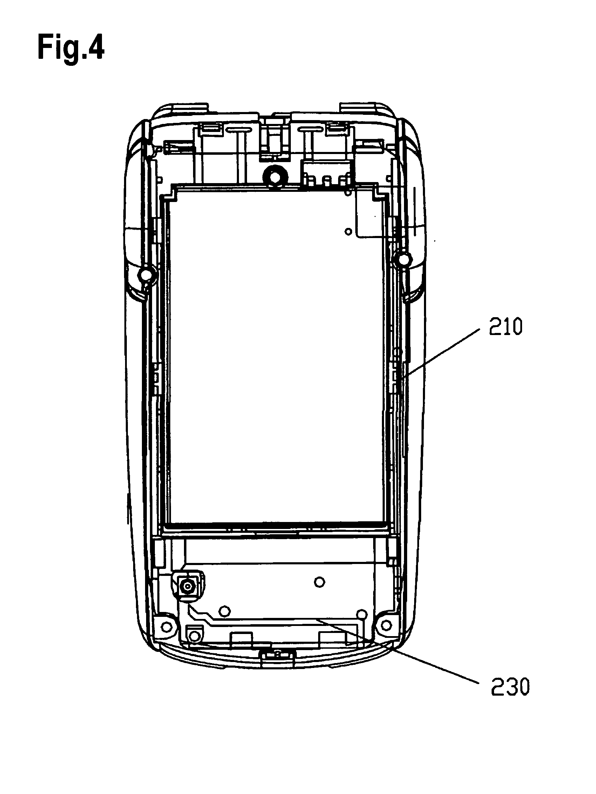

In this way, the microphone structure for a cell phone according to the present invention can comprise the hole for receiving the user's voice in the middle of a cell phone so as to reduce the probability of being blocked by the user's face. Meanwhile, to ensure the reduction of damage to human bodies, such as radiation, an antenna 230 connected to the cell phone circuit can be disposed at the bottom and the backside of the cell phone body 210 as shown in Fig.4.This reduces the interaction with the microphone module and can easily improve the cell phone's call performance.

The microphone hole 212 according to the present invention can be disposed above the cell phone keyboard, such that a user can use it easily while making calls with the cell phone in hand and prevent the microphone hole from being blocked due to misoperation that consequently affects voice quality.

It should be understood that the above description of preferred embodiments of the present invention is specific, which shall not be construed as limitations to the scope of protection of the present invention patent. The protection scope of the present invention patent shall be subject to the appended claims.

## Claims

1. A microphone structure for a cell phone
- disposed on a cell phone body and
- comprising a microphone module connected to a main circuit board of the cell phone,
**characterized in that**
- on said cell phone body, a microphone hole is formed in the middle of a shell on a side facing a user thereof, and said microphone module is arranged corresponding to said microphone hole.

2. The microphone structure for cell phone as set forth in claim 1, **characterized in that** said microphone hole is formed above a cell phone keyboard.

3. The microphone structure for a cell phone as set forth in claim 1 or 2, **characterized in that** an antenna is further connected to said cell phone circuit board and said antenna is disposed below said cell phone keyboard and on a backside thereof.

4. The microphone structure for a cell phone as set forth in Claim 3, **characterized in that** said cell phone is a flip, slide or bar phone.
